# EUROPEAN PATENT SPECIFICATION

(11) **EP 3 184 428 B1**
(45) Date of publication and mention of the grant of the patent: **31.01.2018**
(21) Application number: 15202176.2
(22) Date of filing: 22.12.2015
(51) Int. Cl.: B64D 11/06

(54) **VEHICLE INTERIOR DEVICE**
FAHRZEUGINNENRAUMVORRICHTUNG
DISPOSITIF D'INTÉRIEUR DE VÉHICULE

(43) Date of publication of application: 28.06.2017
(73) Proprietor: Recaro Aircraft Seating GmbH & Co. KG, 74523 Schwäbisch Hall (DE)
(72) Inventor: VAN DER WESTHUIZEN, Arthö Otto, 7530 Durbanville, Western Cape (ZA); TREDOUX, Louis, 7130 Somerset West, Western Cape (ZA); BEKKER, Stephanus, 7130 Somerset West, Western Cape (ZA)
(74) Representative: Daub, Thomas

(56) References cited:
- WO-A1-2015/164952
- US-A1- 2008 145 635
- US-B2- 9 168 855

## Description

### Background

The invention relates to a vehicle interior device
A vehicle interior device comprising a structural part that comprises at least one main component and at least one reinforcing component that is connected to the main component via one single thermoforming process has already been proposed. Documents WO2015/164952, US9168855 and US2008/0145635 relate to vehicle interior devices manufactured by thermoforming, having reinforcing layers (or sheets of material) that have been added subsequently. The objective of the invention is, in particular, to provide a vehicle interior device that is particularly lightweight and easy to manufacture.
The objective is achieved according to the invention by the features of patent claim 1, while advantageous implementations and further developments of the invention may be obtained from the subclaims.

### Summary

The invention is based on a vehicle interior device comprising a structural part that comprises at least one main component and at least one reinforcing component that is connected to the main component via one single thermoforming process.
It is proposed that the at least one reinforcing component and/or the at least one main component are embodied as sheet elements. A "structural part" is to be understood, in this context, in particular as a part of a vehicle interior device which can transfer loads that are applied on it. In particular, a structural part is to be understood as an aircraft seat and/or a part of an aircraft seat interior device which can transfer loads that are applied on it. The structural part is preferably embodied as a part of a load bearing structure of the aircraft seat which can transfer loads on the aircraft seat, in particular loads applied by a sitting passenger to a seat frame of the aircraft seat. The structural part is preferably embodied as a seat bottom. It is also conceivable that the structural part is embodied as a panel that covers parts of an aircraft seat or an aircraft seat interior device and that is capable of transferring handhold loads to a bearing structure the structural part is connected to. A "main component" is to be understood, in this context, in particular as a component which makes up a major part of the structural part and which forms at least partially, preferably primarily an outer contour of the structural part. It is also conceivable that the structural part is made up of two or more main parts that are connected planar, wherein each main component forms the outer contour of the structural part on one side. A "reinforcing component" is to be understood, in this context, in particular as a component that is provided to reinforce a further element, in particular the structural part, in areas that are most stressed. The reinforcing component is in particular provided for enhancing the stiffness and/or the strength of a further element, in particular the structural part. By "connected" is herein to be understood, in particular, connected via an adhesive bond and/or a substance-to-substance bond, wherein the at least two connected elements are connected in a planar manner. By "connected via one single thermoforming process" is to be understood that the elements to be connected are separate elements prior to the thermoforming process and are bonded together in a planar fashion in one single process. The elements to be connected, in particular the at least one main component and the reinforcing component, are not pre-connected in a planar fashion but it is conceivable that the components are connected by adhesive spot connections to hold the elements in the correct arrangement prior to the thermoforming process. By a "thermoforming process" is to be understood a joining process and/or a reshape process in which at least one element is reshaped by applying pressure and heat to the element or in which at least two elements are reshaped and or connected to one another by applying pressure and heat to the elements for a certain amount of time in each case. By a "sheet element" is to be understood, in particular, a thin element that has an extent in at least two axes which is considerably bigger than an extent in a third axis, wherein all the axes enclose an angle of 90 degrees with both other axes. As a result of this, the structural part can be built in a particularly lightweight and optimized manner.

It is further proposed that the at least one main component is made up of a continuous fiber reinforcement thermoplastic pre-consolidated sheet. By a "continuous fiber reinforcement thermoplastic sheet" is to be understood, in this context, in particular a sheet of a continuous fabric of fibers interconnected and embedded in a matrix of a thermoplastic compound. By "pre-consolidated" is to be understood, in particular, that the reinforcement fibers are embedded in the thermoplastic matrix prior to a lay-up process for the thermoforming process. As a result, the main components can be handled very easily and a particularly simple manufacturing process can be achieved.

Furthermore, it is proposed that the at least one reinforcing component is made up of the same matrix material as the at least one main component. By the wording that "the at least one reinforcing component is made up of the same matrix material as the at least one main component" is to be understood that, in particular, the thermoplastic material that makes up the matrix of the reinforcing component is the same as the thermoplastic material that makes up the matrix of the main component, wherein it is conceivable that the reinforcement fibers are different. As a result of this, the main component and the reinforcing component can be connected easily and strongly.

It is also proposed that the structural part is a seat bottom and/or a backrest. As a result of this, the structural part can be built in a particularly preferable way.

Moreover, it is proposed that the structural part, which forms a seat bottom, comprises a flexible front lip. A "flexible front lip" is to be understood as a front part of the seat bottom that can be flexed in at least a vertical direction. Thereby, it is conceivable that the flexible front lip has also reinforcing components or that the reinforcing components of the structural part protrude into the flexible front lip. As a result of this, a preferably ergonomic seat bottom can be achieved.

The vehicle interior device according to the invention is herein not to be restricted to the application form and embodiment described above. In particular, the vehicle interior device according to the invention may have, for implementing a functionality herein described, a number of individual elements, structural components and units that differs from a number that has been mentioned herein.

### Drawings

Further advantages may be gathered from the following description of the drawings. In the drawings three exemplary embodiments of the invention are depicted. The drawings, the description and the claims contain a plurality of features in combination. The person having ordinary skill in the art will purposefully also consider the features separately and will find further expedient combinations.

It is shown in:
- Fig. 1: A schematic view of a vehicle interior device in a first embodiment with a structural part formed as a seat bottom in a top view,
- Fig. 2: a schematic view of the seat bottom in a bottom view,
- Fig. 3: a schematic view of a main component and reinforcing components of the structural part prior to a thermoforming process,
- Fig. 4: a schematic view of a vehicle interior device in a second embodiment with a structural part formed as a backrest and
- Fig. 5: a schematic view of a vehicle interior device in a third embodiment with a structural part formed as a cover.

### Description of the embodiments

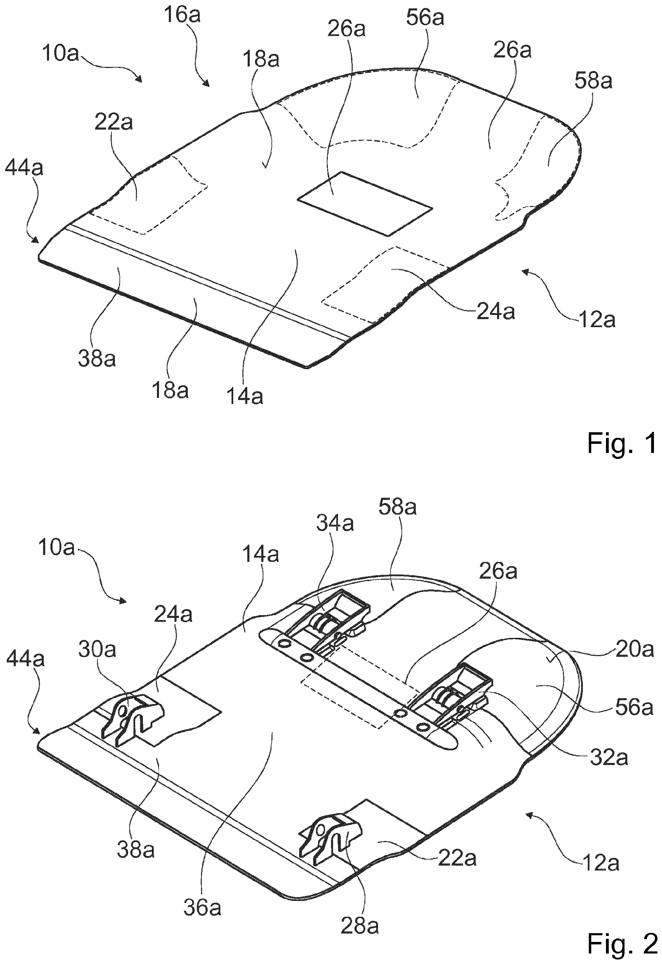

Figures 1 to 3 show a first embodiment of a vehicle interior device. The vehicle interior device is embodied as an aircraft seat device. The vehicle interior device is a part of an aircraft seat 10a. The aircraft seat 10a is partially shown in the figures. The aircraft seat 10a is mounted on a mounting plane of an aircraft. The mounting plane is embodied by a floor of an aircraft passenger cabin. The aircraft seat 10a comprises a mounting unit via which the aircraft seat is mounted to the mounting plane. The mounting unit has seat legs which are not shown in the figures. The aircraft seat 10a comprises a seat bottom 12a. The seat bottom 12a is connected to the mounting unit of the aircraft seat 10a. The seat bottom 12a forms a seating area, a passenger can sit on. The seat bottom 12a comprises a base body 14a. The base body 14a builds a main carrying structure of the seat bottom 12a. The base body 14a transmits loads that are applied on the seat bottom 12a into the mounting unit. The seat bottom 12a has several connecting elements 28a, 30a, 32a, 34a by which the seat bottom 12a is connected to the mounting unit. The connecting elements 28a, 30a, 32a, 34a are arranged at a bottom side 36a of the base body 14a. The connecting elements 28a, 30a, 32a, 34a are rigidly connected to the bottom side 36a of the base body 14a. The two connecting elements 28a, 30a are embodied as front connectors and are provided for connecting the seat bottom 12a to a front cross beam of the mounting unit. The two connecting elements 32a, 34a are embodied as back connectors and are provided for connecting the seat bottom 12a to a rear cross beam of the mounting unit. Via the connecting elements 28a, 30a, 32a, 34a the base body 14a and therefore the seat bottom 12a are connected moveably to the cross beams of the mounting unit. Therefore, an adjustment of a seat angle of the seat bottom is possible in a situation when a passenger is sitting on the aircraft seat 10a.

The seat bottom 12a has a comfort element which is arranged on a top side of the base body 14a. The comfort element is not shown in the figures. The comfort element has a cover that covers at least the top side of the base body 14a. Preferably, the comfort element also has a cushion element between the cover and the base body 14a which enhances a seating comfort. The cushion element can be built from a foam element. The aircraft seat 10a comprises a backrest. The backrest is not shown in figures 1 and 2. The backrest is connected to the seat bottom 12a. The backrest forms a support area for a back of a passenger sitting on the aircraft seat.

The vehicle interior device comprises a structural part 16a. The base body 14a of the seat bottom 12a forms the structural part 16a. The structural part 16a comprises a main component 18a. The structural part 16a comprises only the one main component 18a. The main component 18a is embodied as a sheet element. In particular, the main component 18a is made up of a continuous fiber reinforcement thermoplastic pre-consolidated sheet. The main component 18a has a matrix which consists of a thermoplastic material. The main component 18a has reinforcement fibers which are embedded in the thermoplastic material. The thermoplastic material is a polycarbonate. Thereby, it is conceivable that the thermoplastic material is another thermoplastic material considered appropriate by a person skilled in the art. The reinforcement fibers of the main component 18a are made up of glass fibers. The glass fibers making up the reinforcement fibers of the main component 18a are interconnected and implement a continuous fabric.

It is also conceivable that the main component 18a has reinforcement fibers made up of different materials, such as carbon fibers.

The structural part 16a has five reinforcing components 22a, 24a, 26a, 56a, 58a. In general, it is also possible that the structural part 16a has a number of reinforcing components which differs from the above-mentioned number. The reinforcing components 22a, 24a, 26a, 56a, 58a are connected to the main component 18a. The reinforcing components 22a, 24a, 26a, 56a, 58a are arranged on a topside of the main component 18a. It is also conceivable that the reinforcing components 22a, 24a, 26a, 56a, 58a are arranged on a bottom side of the main component 18a. It is also conceivable that the reinforcing components 22a, 24a, 26a, 56a, 58a are arranged on different sides of the main component 18a. With their one side the reinforcing components 22a, 24a, 26a, 56a, 58a are interconnected with the first main component 18. The reinforcing components 22a, 24a, 26a, 56a, 58a stiffen the structural part 16a in areas that are exposed to the most stress in a usage situation. The reinforcing components 22a, 24a, 26a, 56a, 58a are embodied as sheet elements. The reinforcing components 22a, 24a, 26a, 56a, 58a are made up of fiber reinforced thermoplastic sheets. The reinforcing components 22a, 24a, 26a, 56a, 58a each have a matrix made up of a thermoplastic material and form reinforcement fibers which are embedded in the matrix. The thermoplastic material that forms the matrix of the reinforcing components 22a, 24a, 26a, 56a, 58a is the same as the thermoplastic material that forms the matrix of the main component 18a. Thereby, the main component 18a and the reinforcing components 22a, 24a, 26a, 56a, 58a can be connected to each other in a very easy and strong fashion. The reinforcement fibers of the reinforcing components 22a, 24a, 26a, 56a, 58a are made up of glass fibers. It is also conceivable that the reinforcement fibers of the reinforcing components 22a, 24a, 26a, 56a, 58a are made up of a different material, for example carbon fibers or other organic or inorganic fibers. In particular, it is possible that the reinforcement fibers of the reinforcing components 22a, 24a, 26a, 56a, 58a are made up of a different fiber material compared to the reinforcement fibers of the main component 18a.

The structural part 16a which forms the base body 14a of the seat bottom 12a comprises a flexible front lip 38a. The flexible front lip 38a is arranged at a front 44a of the seat bottom 12a. The flexible front lip 38a is integrally formed with the base body 14a. The flexible front lip 38a is formed by the main component 18a. It is generally possible that the flexible front lip 38a is partially made up of at least one of the reinforcing components 22a, 24a, 26a, 56a, 58a. Thereby, it is possible that at least one of the reinforcing components 22a, 24a, 26a, 56a, 58a extends into the front area of the base body 14a that forms the flexible front lip 38a.

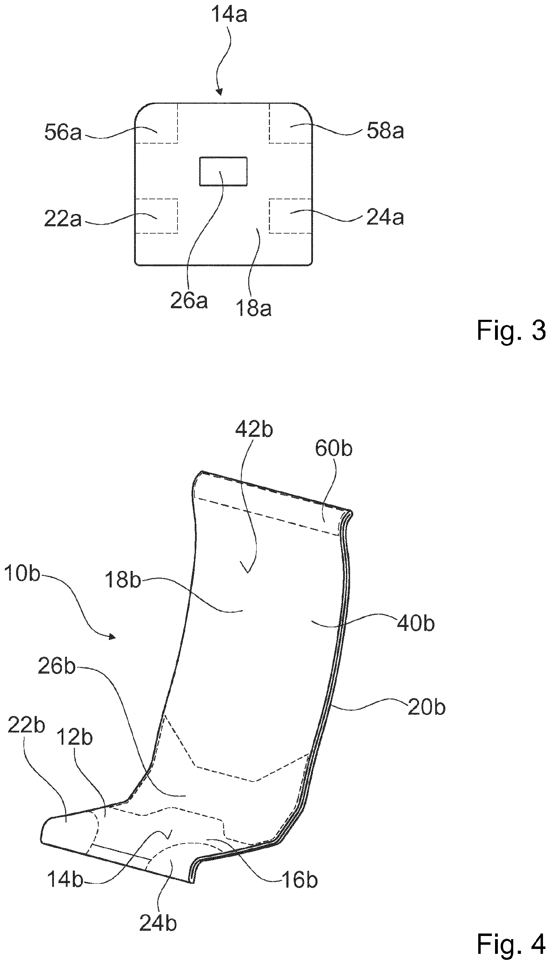

The main component 18a and the reinforcing components 22a, 24a, 26a, 56a, 58a are connected to one another via one single thermoforming process. The main component 18a and the reinforcing components 22a, 24a, 26a, 56a, 58a are thereby connected in a planar manner during the one single thermoforming process. The main component 18a and the reinforcing components 22a, 24a, 26a, 56a, 58a are not fixed to each other prior to the one single thermoforming process. The main component 18a and the reinforcing components 22a, 24a, 26a, 56a, 58a are laid upon the other in the way they are to be connected to one another prior to the thermoforming process. Thereby, the main component 18a and the reinforcing components 22a, 24a, 26a, 56a, 58a are aligned with respect to each other by means of a template. Figure 3 shows an exemplary lay-up of the main component 18a and the reinforcing components 22a, 24a, 26a, 56a, 58a. It is generally conceivable that the main component 18a and/or the reinforcing components 22a, 24a, 26a, 56a, 58a are partly fixed to each other by a small amount of adhesive prior to the thermoforming process or by a welding point. After the lay-up the main component 18a and the reinforcing components 22a, 24a, 26a, 56a, 58a are connected to each other via the one thermoforming process under the influence of pressure and heat. The heat applied in the thermoforming process is in the range of 270 to 440 degrees Celsius. The main component 18a and the reinforcing components 22a, 24a, 26a, 56a, 58a are heated in a heating step of the thermoforming process to a temperature at which the matrix material melts. Thereby, the applied heat is sufficiently high so that a residual heat in the matrix material is high enough during the whole thermoforming process to ensure a uniform connection between the main component 18a and the reinforcing components 22a, 24a, 26a, 56a, 58a. The heated main component 18a and the reinforcing components 22a, 24a, 26a, 56a, 58a are subjected to pressure in their heated state. The main component 18a and the reinforcing components 22a, 24a, 26a, 56a, 58a are laid upon the other in a mold that has the respective form of the structural part 14a, whereby the main component 18a and the reinforcing components 22a, 24a, 26a, 56a, 58a are reshaped in the respective form during the time the pressure is applied on them. During the thermoforming process the matrix materials of the main component 18a and the reinforcing components 22a, 24a, 26a, 56a, 58a melt together, thereby forming one single sheet material. After the thermoforming process the main component 18a and the reinforcing components 22a, 24a, 26a, 56a, 58a are connected to form one continuous material.

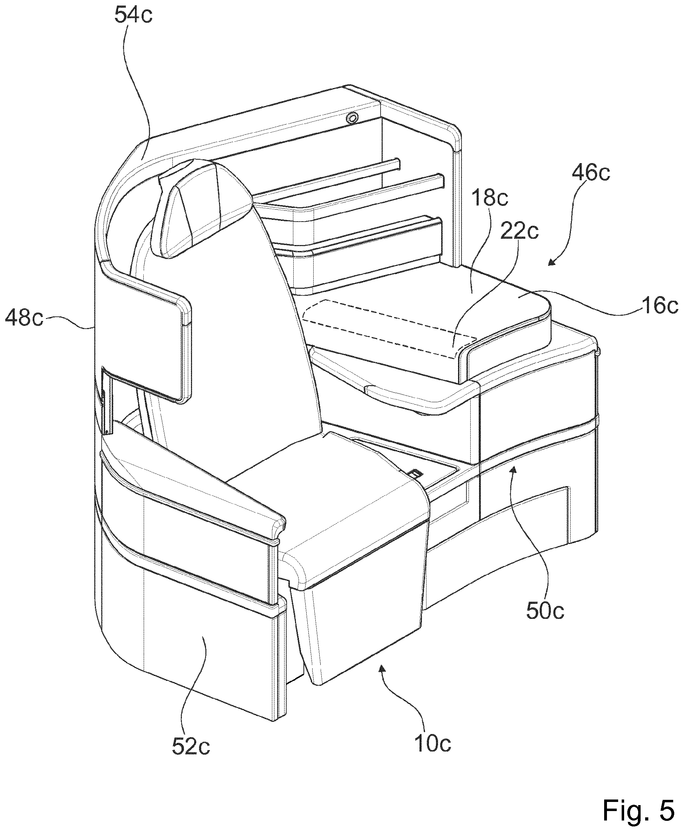

In figures 4 and 5 two further exemplary embodiments of the invention are shown. The following description and the drawings are substantially limited to the differences between the exemplary embodiments, wherein regarding identically designated structural elements, in particular regarding structural elements with the same reference numerals, principally the drawings and/or the description of the other exemplary embodiment in particular of figures 1 to 3 may be referred to. For distinguishing between the exemplary embodiments the letter a is put after the reference numerals of the exemplary embodiment in figures 1 to 3. In the exemplary embodiments of figures 4 and 5 the letter a has been replaced by the letters b and c.

Figure 4 shows a second embodiment of a vehicle interior device. The vehicle interior device is a part of an aircraft seat 10b. The aircraft seat 10b is partially shown in the figures. The aircraft seat 10b is mounted on a mounting plane of an aircraft. The mounting plane is embodied by a floor of an aircraft passenger cabin. The aircraft seat 10b comprises a mounting unit via which the aircraft seat is mounted to the mounting plane. The aircraft seat 10b comprises a seat bottom 12b. The seat bottom 12b is connected to the mounting unit of the aircraft seat 10b. The seat bottom 12b forms a seating area, a passenger can sit on. The seat bottom 12b comprises a base body 14b. The base body 14b builds a main carrying structure of the seat bottom 12b. The base body 14b transmits loads that are applied on the seat bottom 12b into the mounting unit. The aircraft seat 10b comprises a backrest 40b. The backrest 40b is connected to the seat bottom 12b. The backrest 40b forms a support area for a back of a passenger sitting on the aircraft seat. The backrest 40b comprises a base body 42b. The base body 42b builds a main carrying structure of the backrest 40b. The base body 42b transmits loads that are applied on the seat bottom 12b into the mounting unit. The seat bottom 12b and the backrest 40b are embodied as a one-piece element. The seat bottom 12b and the backrest 40b form one single piece. The vehicle interior device comprises a structural part 16b. The base body 14b of the seat bottom 12b and the base body 42b of the backrest 40b form the structural part 16b. The structural part 16b comprises a first main component 18b. The structural part 16b comprises a second main component 20b. The two main components 18b, 20b are embodied as sheet elements. In particular, the main components 18b, 20b are made up of continuous fiber reinforcement thermoplastic pre-consolidated sheets.

The two main components 18b, 20b consist of the same thermoplastic material which implements their matrix. The thermoplastic material is a polycarbonate. It is thereby conceivable that the thermoplastic material is another thermoplastic material considered appropriate by a person skilled in the art. The reinforcement fibers of the main components 18b, 20b are made up of carbon fibers. The carbon fibers making up the reinforcement fibers of the main components 18b, 20b are interconnected and implement a continuous fabric. It is also conceivable that the two main components 18b, 20b have reinforcement fibers made up of different materials. Thereby, it is conceivable that, for example, the reinforcement fibers of the first main component are made up of carbon fibers and the reinforcement fibers of the second main component are made up of glass fibers. The first main component 18b forms the top side of the base body 14b. The second main component 20b forms the bottom side of the base body 14b. The first main component 18b and the second main component 20b are interconnected. The two main components 18b, 20b are interconnected in a planar manner.

The structural part 16b has four reinforcing components 22b, 24b, 26b, 60b. In general, it is also possible that the structural part 16b has a number of reinforcing components which differs from the above-mentioned number. The first two reinforcing components 22b, 24b are arranged in a front area of the seat bottom 12b. The third reinforcing component 26b is arranged in a transition area between the seat bottom 12b and the backrest 40b. The third reinforcing component 60b is arranged in a top area of the backrest 40b. The reinforcing components 22b, 24b, 26b, 60b are connected to the main components 18b, 20b. The reinforcing components 22b, 24b, 26b, 60b are arranged between the first main component 18b and the second main component 20b. The reinforcing components 22b, 24b, 26b, 60b are embodied as sheet elements. The reinforcing components 22b, 24b, 26b, 60b are made up of fiber reinforced thermoplastic sheets. The main components 18b, 20b and the reinforcing components 22b, 24b, 26b, 60b are connected to one another via one single thermoforming process. The single thermoforming process is equivalent to the thermoforming process of the first embodiment of the invention. In general it would also be conceivable that the backrest 40b and the seat bottom 12b are each embodied as a single piece element, whereby each base body would form its own structural part. Furthermore, it would be conceivable that further components are integrated into the structural part 16b. Thereby it is possible that preformed components such as mounting plates are laid upon the other together with the main components 18b, 20b and the reinforcing components 22b, 24b, 26b, 60b prior to the single thermoforming process.

Figure 5 shows a third embodiment of a vehicle interior device. The vehicle interior device is embodied as an aircraft seat interior device. The vehicle interior device is part of an aircraft seat module 46c. The aircraft seat module 46c is embodied as a business class and or first class seat compartment. The aircraft seat module 46c comprises an aircraft seat 10c, a shell 48c that partially surrounds the aircraft seat 10c and a console 50c arranged next to the aircraft seat 10c. The console 50c forms different accessories of the aircraft seat 10c, such as storing and tray elements. Furthermore, it is conceivable that the console 50c forms an ottoman of an aircraft seat module arranged behind the aircraft seat module 46c.

The vehicle interior device comprises a structural part 16c. The structural part 16c is embodied as a cover of the aircraft seat module 46c. The structural part 16c forms a tray surface next to the aircraft seat 10c. The structural part 16c is connected to a carrying structure of the console 50c. The structural part 16c has a main component 18c. The main component 18c is embodied as a sheet element. In particular, the main component 18c is made up of a continuous fiber reinforcement thermoplastic pre-consolidated sheet. The structural part 16c has one reinforcing component 22c. The reinforcing component 22c is arranged on an inside of the main component 18c. The reinforcing component 18c is arranged in a bent area of the structural part 16c, thereby reinforcing this area. The reinforcing component 22c is embodied as a sheet element. The reinforcing component 22c is made up of a fiber reinforced thermoplastic sheet. The main component 18c and the reinforcing component 22c are connected to one another via one single thermoforming process. The single thermoforming process is equivalent to the thermoforming process of the first embodiment of the invention. In general, it would also be conceivable that elements 52c, 54c of the shell are made up as a structural part equivalent to the structural part 16c. The reinforcing components 22c of such structural parts 16c could be arranged to stiffen or strengthen highly stressed areas or merely to add thickness to a part, for example in ram protection areas.

### Reference numerals

- 10: aircraft seat
- 12: seat bottom
- 14: base body
- 16: structural part
- 18: main component
- 20: main component
- 22: reinforcing component
- 24: reinforcing component
- 26: reinforcing component
- 28: connecting element
- 30: connecting element
- 32: connecting element
- 34: connecting element
- 36: bottom side
- 38: flexible front lip
- 40: backrest
- 42: base body
- 44: front
- 46: aircraft seat module
- 48: shell
- 50: console
- 52: element
- 54: element
- 56: reinforcing component
- 58: reinforcing component
- 60: reinforcing component

## Claims

1. A vehicle interior device comprising a structural part (16a; 16b; 16c) that comprises at least one main component (18a; 18b, 20b; 18c) and at least one reinforcing component (22a, 24a, 26a, 56a, 58a; 22b, 24b, 26b, 60b; 22c) that is connected to the main component (18a; 18b, 20b; 18c) via one single thermoforming process, **wherein** the at least one reinforcing component (22a, 24a, 26a, 56a, 58a; 22b, 24b, 26b, 60b; 22c) and/or the at least one main component (18a; 18b, 20b; 18c) are embodied as sheet elements.

2. The vehicle interior device according to claim 1, **wherein** the at least one main component (18a; 18b, 20b; 18c) is made up of a continuous fiber reinforcement thermoplastic pre-consolidated sheet.

3. The vehicle interior device according to claim 1 or 2, **wherein** the at least one reinforcing component (22a, 24a, 26a, 56a, 58a; 22b, 24b, 26b, 60b; 22c) is made up of the same matrix material as the at least one main component (18a; 18b, 20b; 18c).

4. The vehicle interior device according to one of the preceding claims, **wherein** the structural part (16a; 16b) is a seat bottom (12a) and/or a backrest (40b).

5. The vehicle interior according to claim 4, **wherein** the structural part (16a) which forms a seat bottom (12a) comprises a flexible front lip (38a).

6. Aircraft seat with a vehicle interior device according to one of the preceding claims.

7. A method for building a structural part according to one of the preceding claims, **wherein** the at least one main component (18a; 18b, 20b; 18c) and the at least one reinforcing component (22a, 24a, 26a, 56a, 58a; 22b, 24b, 26b, 60b; 22c) are connected via a thermoforming process.

## Patentansprüche

1. Eine Fahrzeuginnenraumvorrichtung, umfassend ein Bauteil (16a; 16b; 16c), welches zumindest eine Hauptkomponente (18a; 18b, 20b; 18c) und zumindest eine Verstärkungskomponente (22a, 24a, 26a, 56a, 58a; 22b, 24b, 26b, 60b; 22c), welche durch einen einzigen Thermoform-Prozess mit der Hauptkomponente (18a; 18b, 20b; 18c) verbunden ist, aufweist, **dadurch gekennzeichnet, dass** die zumindest eine Verstärkungskomponente (22a, 24a, 26a, 56a, 58a; 22b, 24b, 26b, 60b; 22c) und/oder die zumindest eine Hauptkomponente (18a; 18b, 20b; 18c) als Folienelemente ausgebildet sind.

2. Die Fahrzeuginnenraumvorrichtung nach Anspruch 1, **dadurch gekennzeichnet, dass** die zumindest eine Hauptkomponente (18a; 18b, 20b; 18c) aus einer endlosfaserverstärkten, vorgehärteten Thermoplastfolie gebildet ist.

3. Die Fahrzeuginnenraumvorrichtung nach Anspruch 1 oder 2, **dadurch gekennzeichnet, dass** die zumindest eine Verstärkungskomponente (22a, 24a, 26a, 56a, 58a; 22b, 24b, 26b, 60b; 22c) aus dem gleichen Matrixmaterial gebildet ist wie die zumindest eine Hauptkomponente (18a; 18b, 20b; 18c).

4. Die Fahrzeuginnenraumvorrichtung nach einem der vorhergehenden Ansprüche, **dadurch gekennzeichnet, dass** das Bauteil (16a; 16b) ein Sitzboden (12a) und/oder eine Rückenlehne (40b) ist.

5. Die Fahrzeuginnenraumvorrichtung nach Anspruch 4, **dadurch gekennzeichnet, dass** das einen Sitzboden (12a) ausbildende Bauteil (16a) einen flexiblen vorderen Rand (38a) aufweist.

6. Flugzeugsitz mit einer Fahrzeuginnenraumvorrichtung nach einem der vorhergehenden Ansprüche.

7. Ein Verfahren zur Herstellung eines Bauteils nach einem der vorhergehenden Ansprüche, **dadurch gekennzeichnet, dass** die zumindest eine Hauptkomponente (18a; 18b, 20b; 18c) und die zumindest eine Verstärkungskomponente (22a, 24a, 26a, 56a, 58a; 22b, 24b, 26b, 60b; 22c) mittels eines Thermoform-Prozesses verbunden werden.

## Revendications

1. Un dispositif d'intérieur de véhicule comprenant une part structurelle (16a ; 16b ; 16c), laquelle comporte au moins un composant principal (18a ; 18b, 20b ; 18c) et au moins un composant de renfort (22a, 24a, 26a, 56a, 58a ; 22b, 24b, 26b, 60b ; 22c) raccordé au composant principal (18a ; 18b, 20b ; 18c) par le biais d'un seul procédé de thermoformage, **caractérisé en ce que** l'au moins un composant de renfort (22a, 24a, 26a, 56a, 58a ; 22b, 24b, 26b, 60b ; 22c) et/ou l'au moins un composant principal (18a ; 18b, 20b ; 18c) sont implémentés comme des éléments à feuille.

2. Le dispositif d'intérieur de véhicule selon la revendication 1, **caractérisé en ce que** l'au moins un composant principal (18a ; 18b, 20b ; 18c) est implémenté d'une feuille thermoplastique pré-consolidé à renfort de fil continu.

3. Le dispositif d'intérieur de véhicule selon la revendication 1 ou 2, **caractérisé en ce que** l'au moins un composant de renfort (22a, 24a, 26a, 56a, 58a ; 22b, 24b, 26b, 60b ; 22c) est implémenté du même matériau matrix que l'au moins un composant principal (18a ; 18b, 20b ; 18c).

4. Le dispositif d'intérieur de véhicule selon l'une quelconque des revendications précédentes, **caractérisé en ce que** la part structurelle (16a ; 16b) est une assise de siège (12a) et/ou un dossier (40b).

5. Le dispositif d'intérieur de véhicule selon la revendication 4, **caractérisé en ce que** la part structurelle (16a) forme une assise de siège (12a) comprenant un rebord antérieur flexible.

6. Siège d'aéronef avec un dispositif d'intérieur de véhicule selon l'une quelconque des revendications précédentes.

7. Un procédé pour produire une part structurelle selon l'une quelconque des revendications précédentes, **caractérisé en ce que** l'au moins un composant principal (18a ; 18b, 20b ; 18c) et l'au moins un composant de renfort (22a, 24a, 26a, 56a, 58a ; 22b, 24b, 26b, 60b ; 22c) sont raccordés par le biais d'un procédé de thermoformage.
